# EUROPEAN PATENT SPECIFICATION

(11) **EP 0 989 651 B1**
(45) Date of publication and mention of the grant of the patent: **12.02.2003**
(21) Application number: 99116829.5
(22) Date of filing: 02.09.1999
(51) Int. Cl.: H02G 1/10, E02F 5/10

(54) **Plowshare**
Pflugschar
Soc

(30) Priority: 23.09.1998 US 101726 P; 25.03.1999 US 276445
(43) Date of publication of application: 29.03.2000
(73) Proprietor: Tyco Submarine Systems Ltd., Eatontown, NJ 07724 (US)
(72) Inventor: Messina, Frank Domenick, New Providence, New Jersey 07974 (US)
(74) Representative: VOSSIUS & PARTNER

(56) References cited:
- US-A- 4 498 813
- US-A- 5 088 857

## Description

The present invention relates to the field of plowing and trenching technology and, in particular, to an improved underwater plowshare for use in burying cables needed in submarine cable communications systems.

Although many submarine cable systems (such as transoceanic commercial and military cable systems) are deployed in deep water, significant segments of these systems are routinely installed in shallow water or near-shore locations, especially when a cable is to be terminated and linked into a terrestrial system. In addition, more and more submarine cable systems are being installed in near-continental locations as the demand for festooning and island-to-island and/or island-to-mainland cable systems increases.

Deploying a submarine cable in shallow water, however, exposes the cable system to significant risks of damage. More specifically, submarine cables installed in shallow water or near-shore locations can be harmed by towed fishing gear (including lines and nets), anchors, or other devices that are dragged along the ocean floor and can damage the cable in a physical encounter.

Because of these risks of damage, submarine cables deployed in shallow water are frequently buried one meter or more beneath the ocean floor, thereby minimizing the risk of damage. Moreover, as commercial fishing activities have pushed into deeper and deeper waters, the need to protect cables in those locations has likewise increased. Thus, it is now customary to bury even cables that lie beneath 1500 meters or more of water.

There traditionally have been two ways to bury cables beneath the ocean floor. The most widely used method is to tow a cable-burying sled equipped with a bottom-penetrating "passive" plowshare behind a large cable-laying ship. The movement of the ship in the desired direction of plowing creates a tow force on the sled that causes the plowshare literally to rip a trench through the ocean floor―much like animal- or tractor-drawn terrestrial plowing.

The disadvantage associated with this form of "passive" plowing, however, is that the tow force (or drawbar) on the cable-laying ship created by the passive plowshare can be exceedingly high and is proportional to the burial depth of the cable and the forward velocity of the sled. Consequently, the rate at which a given length of submarine cable can be buried by the use of passive plowing means is limited by the size and power of the cable-laying ship.

Large cable-laying ships, however, cost much more to operate and maintain (or lease) than small "work boat"-type ships. Moreover, as the trend in submarine cable operations is for cable-laying companies to work on short-haul projects―*e.g*., island-to-island or island-to-mainland runs―the massive cable storage space associated with large ships, which can hold thousands of miles of submarine cable, is required less frequently. As a result, it would be highly desirable if a passive plowshare could achieve a sufficient trenching rate while being towed behind a small cable-laying ship. Currently, however, the drawbar force created by passive plowshares precludes the tool from being used efficiently with small ships.

The second method of plowing does not involve a passive plowshare. Instead, an "active" trenching tool is either mounted on a cable-burying sled and towed behind a ship, or, more commonly, the tool is incorporated into a self-propelled, remotely operated vehicle (ROV). Because an "active" tool―such as a mechanical cutter or a water jetting wand―does not rely on the tow force created by the cable-laying ship for its trenching capability, the sled or ROV creates a negligible amount of drawbar force when it is being towed (indeed, a ROV typically will not cause any drawbar on the "mother" ship because, although it is tethered to the ship, it moves under its own power). As a result, the rate at which submarine cable can be buried through the use of "active" trenching means is not dependant on the size of the towing vessel, thereby allowing smaller cable-laying ships to be used.

An "active" trenching tool, however, requires a substantial amount of power to operate effectively. A water jetting wand, for example, operates by directing a large volume of water at high pressure against the soil, thereby breaking up the soil and sweeping it out of the resulting trench. To produce this desired water flow, however*―i*.*e*., a flow rate of approximately 3,000 gallons per minute at a nozzle pressure of about 100 psi―, requires the pumps on the sled or ROV to generate a significant amount of horsepower. The power needed to run these pumps, which can easily reach 2,000 volts or more, is typically generated by the mother ship and is transmitted to the trenching tool through an umbilical cable.

Moreover, while the trenching rate of an active tool does not depend on the size of the cable-laying ship, it does depend on the density, hardness, and compactability of the soil through which a trench is desired to be cut. Specifically, a water jetting wand cannot be "dragged" through the soil; it must break up and remove the soil itself. As a result, the optimal forward velocity of the sled or ROV carrying a jetting tool is the maximum trenching rate of the water jetting wand for the particular soil through which the tool is trenching.

Although the forward velocity of a ROV is generally limited by the tool's rate of trenching, it is possible for a ship to tow a water jetting wand-equipped sled at a faster rate than the wand can trench. To prevent the wand from being damaged if the sled is towed at a speed greater than the wand's trenching rate, however, the wand may be mounted on a hinge or other means so that it can articulate or "float" up and out of the trench when it encounters still-unbroken soil. When the towing speed is decreased or the wand once again encounters "soft" soil and is able to trench at a speed equal to its towing speed, normal trenching can resume. If the tool has "floated" out of the trench for a period of time, however, that section of the trench will not be complete.

Accordingly, it would be desirable to develop a trenching tool that combines the best features of both the "active" and "passive" trenching methods. Specifically, one would hope to develop a passive tool that could be towed behind a ship, but with a significantly reduced drawbar force due to the use of active water jetting technology.

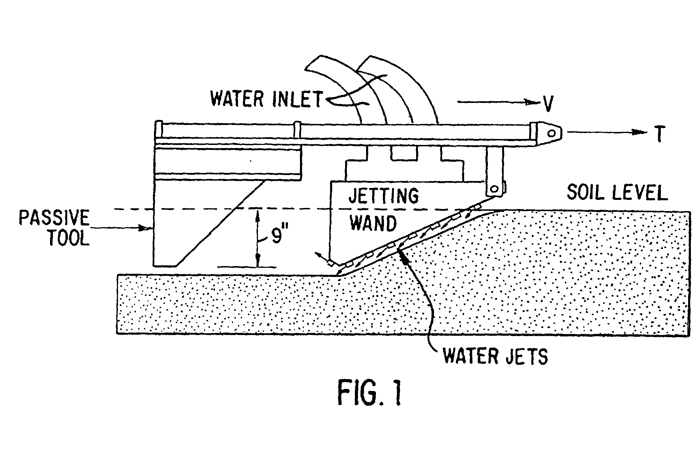

Recently, Lucent Technologies (the relevant division of which may now be owned by General Dynamics) developed a scale model cable-burying test sled that included both an active trenching tool and a passive trenching tool. This device, shown in **Fig. 1**, includes a forward, hinged water jetting wand, and a rear, fixed passive plowshare. The purpose of the forward jetting wand is to liquefy or fluidize the soil as the sled advances forward so that most of the drawbar force on the trailing passive tool is reduced. In this design, the forward wand is hinged so that it can "float" up and out of the way when it encounters hard soils, thereby leaving the passive tool to complete the trench.

Although this two-tool design seems to possess some of the advantages of both passive and active trenching technologies, it would not be practical for commercial cable-laying operations. To begin with, a multiple-tool configuration creates unnecessary technical risks for the cable-laying operation. Specifically, using two separate tools increases the chance of mechanical breakdown and creates a risk that an obstruction may become lodged between the tools. Moreover, if this multiple-tool design was scaled up from its scale model test configuration to full production size, the resulting cable-burying sled would be exceedingly large and cumbersome. As space aboard a cable-laying ship (especially a small cable-laying ship) is typically at a premium, this would be a serious disadvantage.

Moreover, the water jetting wand shown in **Fig. 1** operates by creating a "swept volume flow" of fluidized soil that flows in a downward direction under and/or around the wand. After the wand passes through the soil, however, the fluidized soil will begin to settle and congeal. Thus, placing a passive tool aft of the water jetting wand will not optimize (*i*.*e*., minimize) the amount of drawbar force on the trailing passive tool because in the time it takes for the passive tool to reach the fluidized soil, some of the soil will already have settled out and congealed in the tool's path.

Accordingly, there still exists a need for an improved plowshare that is capable of functioning both as an active and as a passive trenching tool. Specifically, there is a need for a bottom-penetrating plowshare that, because of its use of "active" jetting technology, can be towed through the soil at a much lower drawbar force than traditional passive tools. Consequently, the tool could be pulled by a much smaller ship without reducing its trenching rate, thereby reducing operating costs to submarine cable-construction companies. Alternately, such a tool would allow a towed cable-burying sled to achieve higher-than-normal trenching rates for a given amount of drawbar force, thereby allowing a given trenching operation to be completed in a shorter period of time.

In addition, it would also be desirable if such an improved plowshare (or a portion thereof) could function as a "rudder" for the cable-burying sled. Prior art sleds typically relied on an articulated steering mechanism to control the sled's direction of travel. By functioning as a rudder, however, the plowshare could improve the steering and turning ability of the cable-burying sled to which it was attached. Such a rudder would also decrease the amount of time between the moment when an operator enters a command to turn the cable-burying sled and the first evidence that the sled is turning in response to the command.

US-A-4 498 813 discloses an underground cable installing apparatus utilizing a power driven land vehicle and an elongated cable laying plow handle supported by and for movement with the vehicle in a way which places a lowermost end portion of the blade in the ground with its cutting edge disposed in the direction of movement of the vehicle. In accordance with one operational feature of the apparatus, a plurality of high impact fluid jets are used to aid the cable laying plow blade in cutting through the earth. The blade is also subjected to vibration, preferably by placing a vibratory member on the in-ground portion of the blade.

US-A-5 088 857 discloses a scavenging apparatus for embedding cables or the like into the soil of waters, comprising an elongated scavenging sword being adapted to be attached at different heights to an embedding vessel movable on the soil of waters or to a surface water vessel, the sword having a guide channel extending through the sword from the top to the bottom in the rear area thereof for the guidance of the cable and its depositing on the bottom of the trench scavenged free, the sword further including a water channel extending through from the top to the bottom in the front region thereof and connected to a pressurized water supply at the upper end and to a set of scavenging nozzles located at the front side of the scavenging sword, and a vibrator for the scavenging sword, the vibrator being connected to an energy source located on the vessels by energy supply lines, with the vibrator being located with the scavenging sword near the sole of the sword and the energy supply lines for the vibrator extend inside the sword.

The invention concerns a plowshare having the features of independent claims 1 and 13. The dependent claims 2 to 12 and 14, 15 concern further embodiments of the invention.

In light of the above, an improved plowshare is provided Although it may be used in any submarine or terrestrial application requiring plowing or trenching, the improved plowshare is designed to be towed behind a cable-laying ship and to be used in underwater cable-burying operations to plow trenches in the ocean floor.

The improved plowshare includes a downwardly-extending shank, a plurality of nozzles coupled to the shank, and a downwardly-swept protrusion for breaking up difficult soil and for controlling the depth of the shank in the soil as the trench is being plowed. The shank is rigid and capable of functioning as a passive plowshare, while the water-jetting nozzles, which jet large volumes of water at a slightly forward angle relative to the perpendicular of the soil line, function as active trenching tools.

The plowshare's use of both passive and active plowing technology allows it to be towed through the soil at a much lower drawbar force than traditional passive tools. Specifically, water from the nozzles fluidizes the soil in advance of the plowshare and creates a "swept volume flow" of fluidized soil that flows in a downward direction under and/or around the plowshare. Fluidizing the soil in advance of the plowshare substantially reduces the drawbar force on the plowshare as it moves through the soil. To facilitate this flow of fluidized soil, the shank is aft-raked relative to the soil surface.

Finally, the improved plowshare may be rotatable relative to the plow apparatus, thereby allowing it to function as a "rudder" for the plow apparatus.

The invention will be more readily understood through the following detailed description, with reference to the accompanying drawings, in which:
**FIG. 1** is a depiction of a two-tool device;
**FIG. 2** is side view of the preferred embodiment of the invention;
**FIG. 3** is top view of the preferred embodiment of the invention shown in **Fig. 2;**
**FIG. 4** is detailed view of the forward plowing region of the preferred embodiment of the invention shown in **Fig. 2;**
**FIG. 5** is an end view of one of the jetting surfaces shown in **Fig. 4,** showing the nozzles contained therein;
**FIG. 6** is a side view of the jetting surface shown in **Fig. 5,** showing the nozzles contained therein;
**FIG. 7** is a depiction of the pump unit of the plowing apparatus (only partially shown) and its connections to the preferred embodiment of the invention; and
**FIGS. 8a-c** are graphical illustrations of the direction of travel of the improved plowshare.

The present invention is an improved plowshare. Although the present invention is designed to be used in underwater cable-burying operations (including, for example, communication cable systems and power transmission cable systems), it may be used in any submarine or terrestrial application requiring plowing or trenching.

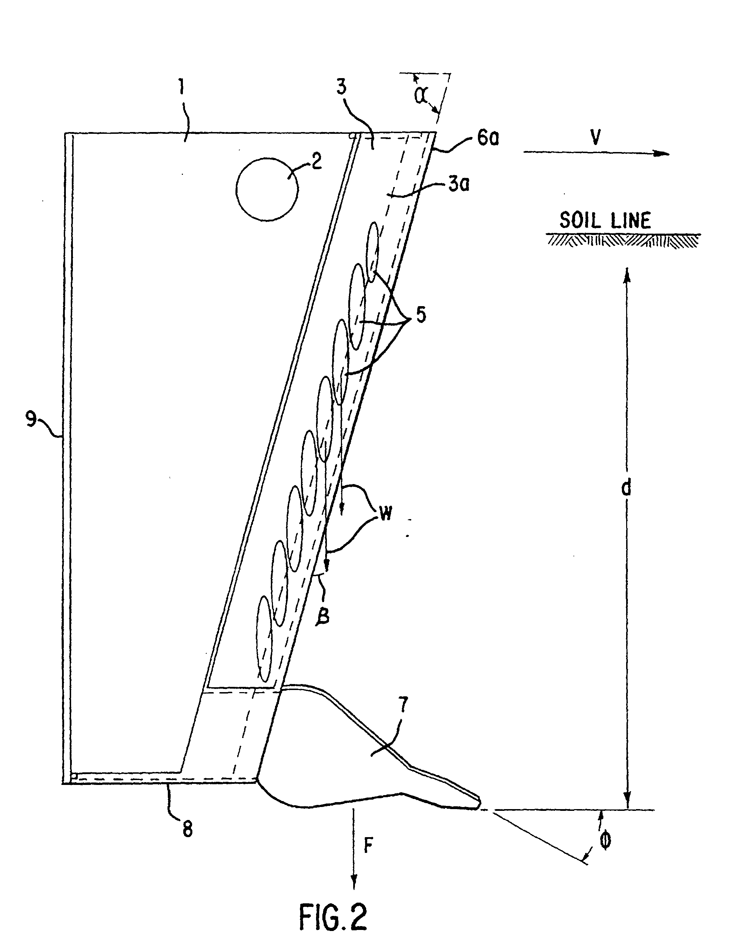

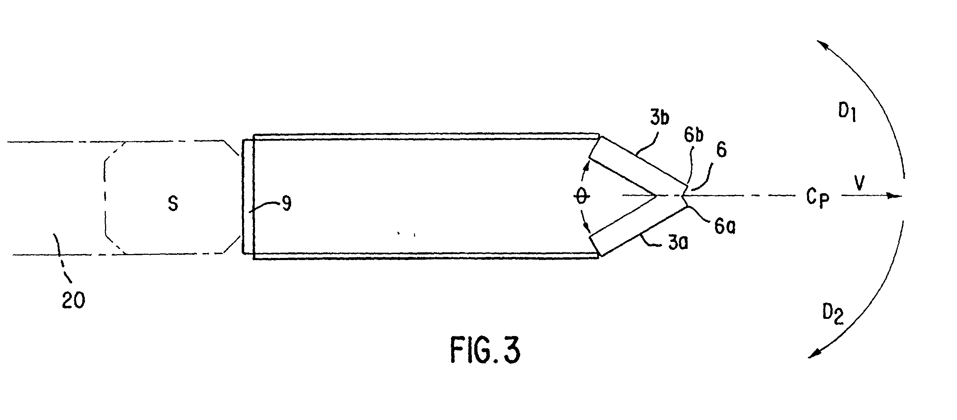

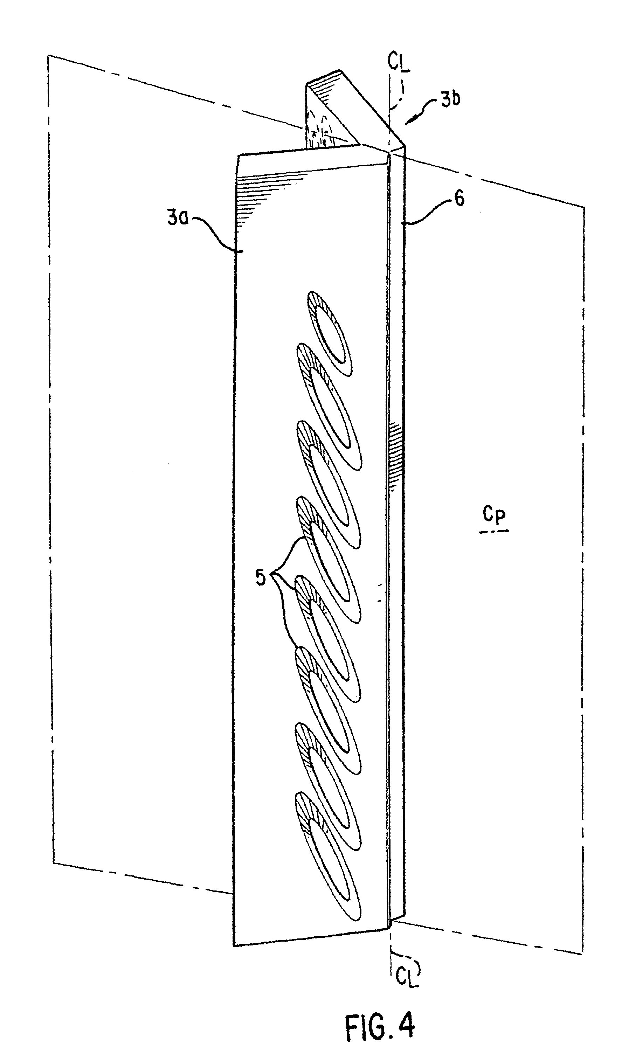

The preferred embodiment of the present invention, shown in **Fig. 2**, comprises a downwardly-extending shank **1** with a forward plowing region **3**. The leading surface of the improved plowshare comprises a forward plowing surface **6** (shown in **Fig. 3**) with a longitudinal centerline **C**_{**L**} (shown in **Fig. 4**), which divides the forward plowing region **3** into first and second jetting surfaces **3a** and **3b.** As can be seen in **Fig. 3,** first and second jetting surfaces **3a** and **3b** together preferably form a forward plowing wedge or chisel with an internal angle θ of approximately 60°.

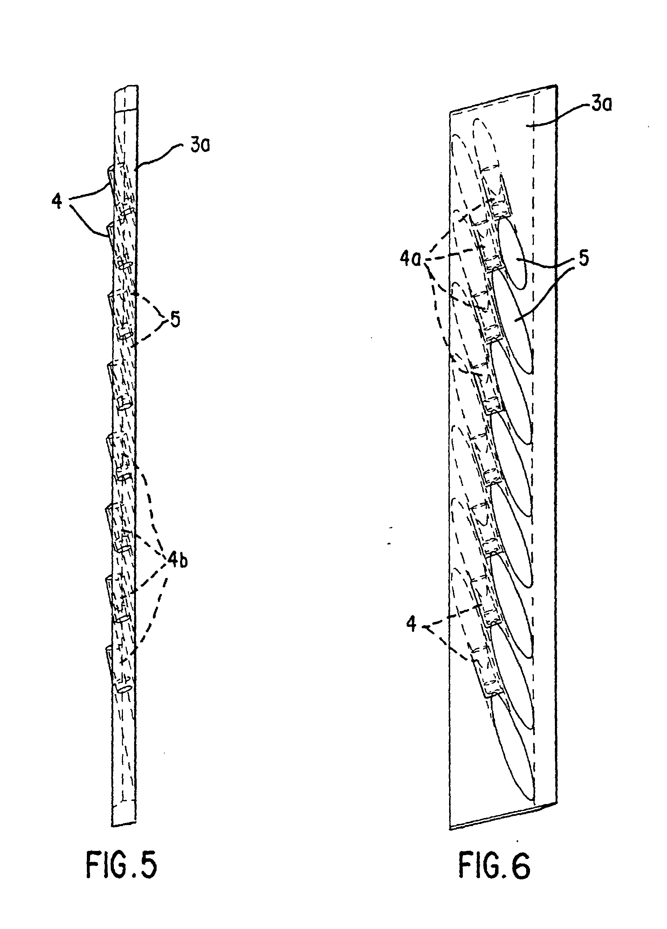

Each jetting surface 3a and 3b includes eight water-jetting nozzles **4** that are recessed within nozzle holes **5,** although any number of nozzles could be used and the nozzles **4** need not be recessed. These positions of the nozzles **4** associated with jetting surface **3a** may be seen with reference to **Figs. 5 and 6,** wherein **Fig. 5** is an end view of jetting surface **3a** and **Fig. 6** is a side view of jetting surface **3a.** In both **Fig. 5** and **Fig. 6,** the nozzles **4** are shown in dotted lines and are recessed within nozzle holes **5.**

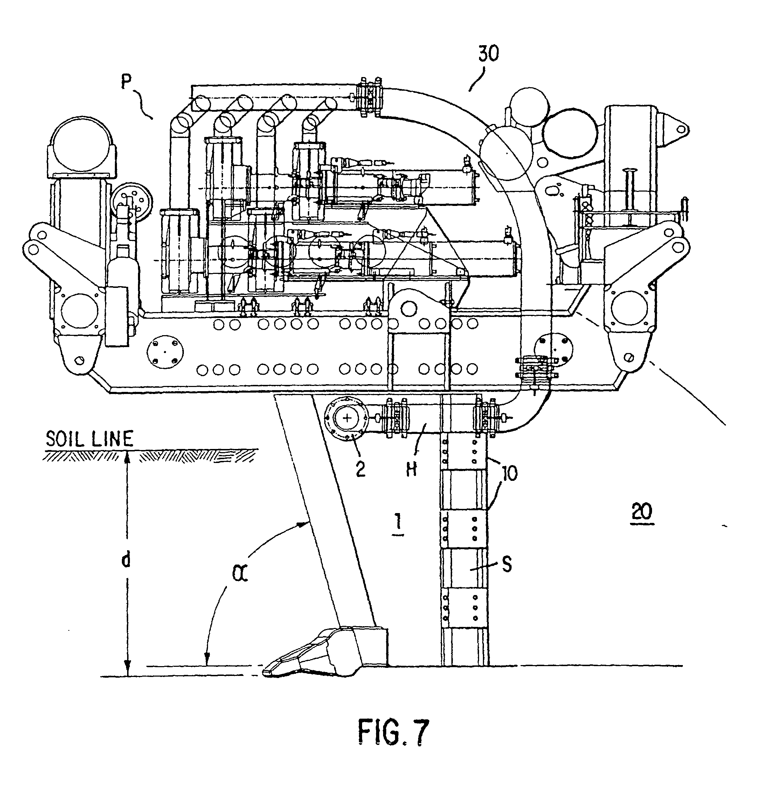

In the preferred embodiment of the invention, the nozzles **4** are removable and interchangeable. Each nozzle **4** is supplied with water through a high-volume pumping apparatus **P** (shown in Fig. 7), which is in fluid communication with the plowshare through a hose **H**. Water from the pump apparatus **P** is pumped through the hose H and enters the shank **1** at a water inlet port **2**. Within the shank **1**, the water enters a manifold (**not shown**) from which it is channeled to the forward plowing region **3,** where it ultimately exits the plowshare through nozzles **4.** Each nozzle **4** is capable of jetting approximately 200 gallons of water per minute at a nozzle pressure of up to 100 pounds per square inch, for a combined maximum output from all sixteen nozzles **4** of approximately 3000 gallons of water per minute. In the preferred embodiment of the invention, the top four nozzles **4a** on each jetting surface **3a** and **3b** are Standard Hughes MPD Nozzles with .750" orifices, while the bottom four nozzles **4b** on each surface **3a** and **3b** are Standard Hughes MPD Nozzles with .875" orifices. As a result of this configuration, the top nozzles **4a** jet at a higher pressure than the bottom nozzles **4b**, although the bottom nozzles **4b** maintain a higher water flow rate than the top nozzles **4a.**

With reference again to **Fig. 2**, when each nozzle **4** is in use it jets a stream of water **w** at an angle β of approximately 20° relative to the forward plowing surface **6.** For example, when the nozzles **4** on jetting surface **3a** are in use and are viewed from the side as in **Fig. 2**, each water jet w intersects the leading edge **6a** of the forward plowing surface **6** at an angle β of approximately 20°. The forward plowing region **3** (including the forward plowing surface **6** and leading edges **6a** and **6b** (*see* **Fig. 3**)), however, is aft-raked at an angle α of approximately 75° relative to the surface of the soil through which the trench is being plowed. As a result, each water stream w is actually discharged at a slightly forward angle of approximately 5° relative to the perpendicular of the soil line. To maximize the effectiveness of the water streams **w,** each stream w is preferable jetted in a plane that is parallel to the longitudinal centerline plane **C**_{**P**} of the shank **1** (shown in **Figs. 3** and **4**), which is defined as the centerline plane of the shank **1** when the shank **1** is in longitudinal alignment with the plowing direction **V** (*see* **Fig. 3**).

Discharging water streams w in the manner described above has the effect of fluidizing the soil in advance of the plowshare and creating a "swept volume flow" of fluidized soil that flows in a downward direction under and/or around the plowshare. Consequently, the drawbar force on the plowing apparatus is reduced as the plowshare moves through the soil in direction **V**.

The downwardly-extending shank **1** also contains a downwardly-swept "ripper" **7** (or "foot") for breaking up difficult soil and for controlling the depth of the shank **1** in the soil. In particular, the advancement of the ripper **7** through the soil in the direction **V** breaks up the soil in the path of the shank **1** and also creates a downward force **F** that counteracts the natural tendency of an aft-swept plowshare (such as the preferred embodiment of the present invention) to "ride up" out of a trench when the plowshare encounters difficult soil. The downward "sweep" φ of the ripper **7** may be any angle that is effective for both breaking up soil and for controlling shank depth. In the preferred embodiment of the invention, the overall downward sweep φ of the ripper **7** is 22.5°.

Although plowshares that are "vertical" (*i.e.*, parallel to the perpendicular of the soil line) or "forward-swept" (*i.e.*, a shank where angle α is greater than 90°) require less downward force **F** than "aft-swept" shanks for controlling the depth of the plowshare in the soil, it is preferable to use an aft-swept plowshare when using active jetting means so as to facilitate the "swept volume flow" of fluidized soil created by the downwardly-discharging water nozzles **4.** Thus, the preferred embodiment of the present invention relies on the ripper **7** to maintain the bottom surface **8** of the shank **1** at a fixed depth beneath the soil line and thus create a trench of roughly uniform depth **d** (measured to the bottom of the ripper **7**; *see* **Figs. 2** and **7**), especially when operating in hard; compacted soils. In the preferred embodiment of the invention, the plowshare is capable of producing a trench at a roughly uniform depth **d** of approximately 1.5 meters in most soils.

The ripper **7** preferably extends in advance of, and further downward than, the shank **1**, although other configurations for the ripper **7** may be used to control the depth of the shank **1** within the soil. In addition, other protrusions, such as downwardly-swept side "vanes," may instead be used to control the depth of the shank **1** provided that the impact of soil on the protrusions creates a sufficient downward force **F** to overcome any tendency of the plowshare to ride up and out of the trench during plowing operations.

With reference to **Fig. 7**, the plowshare is coupled to a plow apparatus **30** (only the pump unit **P** and part of the support structure **S** are shown in **Fig. 7**) and to a trailing cable-laying path **20** (roughly represented by dotted lines). Specifically, couplers **10** are connected to both the shank **1** and to part of the support structure **S** for the plow apparatus **30.**

In the preferred embodiment of the invention, the shank **1** is rotatable. Specifically, the couplers **10** comprise hinges, which allow the shank **1** to rotate about the fixed support structure **S** in both direction **D**_{**1**} and in direction **D**_{**2**} (shown in **Fig. 3**). The support structure **S** used in the preferred embodiment of the invention (*see* **Fig. 7**) comprises a cylindrical shaft with a 5 inch diameter. Other couplers and support structures may of course be used.

The shank's **1** range of motion is preferably from approximately +15° *(i.e.,* in the **D**_{**1**} direction) to approximately -15° (*i.e.,* in the **D**_{**2**} direction). The rotatable range of the shank **1** may also be referred to as being relative to the longitudinal centerline plane **C**_{**P**} of the shank **1** (*see* **Fig. 3**). As discussed above, the longitudinal centerline plane **C**_{**P**} of the shank **1** is generally defined as the centerline plane of the shank **1** when the shank **1** is in longitudinal alignment with the plowing direction **V.** Of course, if a portion of the shank **1,** rather than the entire shank **1,** is rotatable (as in an alternate embodiment of the invention), then the longitudinal centerline plane **C**_{**P**} of the shank **1** would be determined when the rotatable portion was in longitudinal alignment with the rear surface **9** (*i.e*., in its unrotated position).

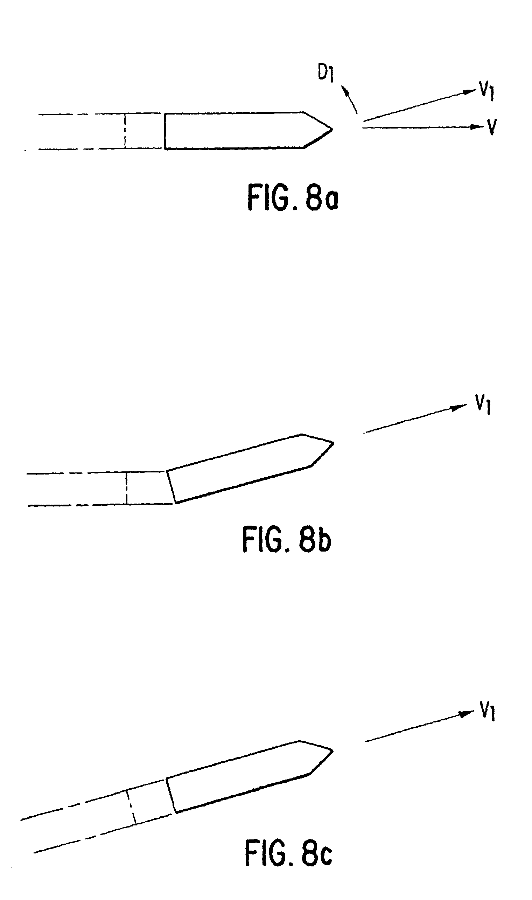

The ability of the shank **1** to rotate relative to the plowing direction **V** allows the shank **1** to function as a "rudder" for the plow apparatus **30** and thereby improve the steering and turning ability of the plowing apparatus **30** when compared to prior art articulated steering means. Specifically, if the operator wished to alter the course of the plow apparatus **30** from a plowing direction **V** to a new plowing direction **V**_{**1**} (shown in **Fig. 8**), he could rotate the shank **1** in direction **D**_{**1**} and continue plowing (*see* **Fig. 8a**). The result of the operator's actions would be that the plow apparatus **30** would tend to track along the new plowing direction **V**_{**1**} *(see* **Fig. 8b**). Then, the shank **1** could be returned to its "unrotated" position―*i.e*., in longitudinal alignment with the longitudinal centerline plane **C**_{**P**}―and the plow apparatus **30** could then plow along new plowing direction **V**_{**1**} (*see* **Fig. 8c**).

While the shank **1** is preferably rotated by mechanical means, such as hydraulic cylinders (**not shown**), nozzles **4** may also be used to help rotate the shank **1**. For example, the operator could flow more water **w** through the nozzles **4** in one surface (*e.g.*, jetting surface **3a**) compared with the nozzles **4** in the other surface (*e.g*., jetting surface **3b**), thereby creating a natural tendency for the shank **1** to rotate (especially if the nozzles **4** jetted in planes that were not necessarily parallel to the longitudinal centerline plane **C**_{**p**} of the shank **1**). Alternately, the nozzles **4** in jetting surface **3a** (or in jetting surface **3b**) could be designed to be movable, so that they could jet water **w** at an angle (e.g., perpendicular) to plowing direction **V** and thus the streams of water **w** would assist the shank **1** in rotating. Likewise, side jets (not shown) could be used to help rotate the shank **1**, both port and starboard.

In an alternate embodiment of the invention, the shank **1** is fixed to the support structure **S**, and the support structure **S** is rotatable relative to the rest of the plow apparatus **30**. In a further embodiment, only a portion of the shank **1** may be rotatable (rather than the entire shank **1**), although the rotatable portion is sufficiently large to effectuate the desired steering control of the plow apparatus **30.**

Still other objects and advantages of the present invention will become readily apparent to those skilled in this art from the above-recited detailed description. For example, while the present invention has been described in connection with burying cables needed in submarine cable communications systems, the novel features of the present invention would be particularly useful in any cable-burying operation―whether terrestrial or submarine―including the laying of power transmission cables. Accordingly, the drawings and descriptions are to be regarded as illustrative in nature, and not as restrictive.

## Claims

1. A plowshare for plowing soil, said plowshare comprising:
a downwardly-extending shank (1) having a forward plowing region (3), said shank defining a longitudinal centerline plane;
a nozzle (4) coupled to said shank (1) at said forward plowing region (3); **characterized in that** at least a portion of said forward plowing region (3) is rotatable relative to the longitudinal centerline plane (C_{P}) of said shank (1).

2. The plowshare as recited in claim 1, wherein the downwardly-extending shank (1) is rotatably coupled to a plow apparatus (30); and wherein said shank (1) is rotatable relative to said longitudinal centerline plane (C_{P}).

3. The plowshare recited in claim 1 or 2, further comprising:
a forward plowing surface (6) of said shank (1);
a first jetting surface (3a) of said shank (1), said first jetting surface (3a) extending in a first direction from the longitudinal centerline (C_{L}) of said forward plowing surface (6), said first jetting surface (3a) having a first nozzle (4a); and
a second jetting surface (3b) of said shank (1), said second jetting surface (3b) extending in a second direction from the longitudinal centerline (C_{L}) of said forward plowing surface (6), said second jetting surface (3b) having a second nozzle (4b).

4. The plowshare recited in claim 3, further comprising a downwardly-swept protrusion coupled to said shank (1), said downwardly-swept protrusion (7) for controlling the depth of said shank (1) in said soil.

5. The plowshare as recited in claim 4, wherein said portion of said forward plowing region (3) is rotatable from approximately +15° to approximately -15° relative to the longitudinal centerline plane (C_{P}) of said shank (1).

6. The plowshare as recited in claim 4, wherein said shank (1) is rotatable from approximately +15° ° to approximately -15° ° relative to the longitudinal centerline plane (C_{P}) of said shank (1).

7. The plowshare as recited in any of claims 4-6, wherein said downwardly-swept protrusion (7) is downwardly-swept at an angle of between approximately 15° and approximately 30°.

8. The plowshare as recited in any of claims 5-7, wherein said downwardly-swept protrusion (7) extends further downward than said shank (1).

9. The plowshare recited in any of claims 5-8, wherein said forward plowing surface (6) is aft-raked relative to the surface of said soil.

10. The plowshare recited in claim 9, wherein said forward plowing surface (6) is aft-raked approximately 75° relative to the surface of said soil.

11. The plowshare as recited in claim 10, wherein each of said first and said second nozzles (4a,4b) jet at an angle of approximately 20° relative to said forward plowing surface (6).

12. The plowshare as recited in claim 11, wherein said first nozzle (4a) jets in a plane that is parallel to the longitudinal centerline plane (C_{P}) of said shank (1) and said second nozzle (4b) jets in plane that is parallel to the longitudinal centerline plane (C_{P}) of said shank (1).

13. A method of installing cable in soil, said method comprising the steps of:
a. providing a plowshare having a downwardly-extending shank (1) with a forward plowing region, said shank defining a longitudinal centerline plane; a nozzle (4) coupled to said shank (1) at said forward plowing region (3); wherein at the least a portion of said forward plowing region (3) is rotatable relative to the longitudinal centerline plane (Cₚ) of said shank (1); and a downwardly-swept protrusion (7) coupled to said shank (1); said downwardly-swept protrusion (7) for controlling the depth of said shank (1) in said soil;
b. drawing said plowshare through said soil;
c. jetting fluid through said nozzle (4) and into said soil;
d. displacing said soil with said shank (1) to form a trench; and
e. deploying said cable in said trench.

14. The method as recited in claim 13, wherein the step of providing a plowshare further comprises the step of providing a plowshare having a forward plowing surface (6) of said shank (1), a first jetting surface (3a) of said shank (1), said first jetting surface (3a) extending in a first direction from the longitudinal centerline (C_{L}) of said forward plowing surface (6), said first jetting surface (3a) having a first nozzle (4a), and a second jetting surface (3b) of said shank (1), said second jetting surface (3b) extending in a second direction from the longitudinal centerline (C_{L}) of said forward plowing surface (6), said second jetting surface (3b) having a second nozzle (4b).

15. The method as recited in claim 13, wherein the step of providing a plowshare further comprises the step of providing a plowshare having a forward plowing surface (6) of said shank (1), said forward plowing surface (6) being aft-raked between approximately 30° and approximately 75° relative to the surface of said soil, a plurality of nozzles (4) coupled to said shank (1) at said forward plowing region (6), and wherein substantially all nozzles (4) of said plurality of nozzles (4) each jet at an angle of between approximately 0° and approximately 90° relative to said forward plowing surface (6).

## Patentansprüche

1. Pflugschar zum Pflügen von Boden, wobei das Pflugschar aufweist:
einen sich abwärts erstreckenden Schaft (1) mit einem vorderen Pflügebereich (3), wobei der Schaft eine Längsmittellinienebene festlegt;
eine Düse (4), die mit dem Schaft (1) am vorderen Pflügebereich (3) gekoppelt ist;
**dadurch gekennzeichnet, daß** mindestens ein Abschnitt des vorderen Pflügebereichs (3) relativ zur Längsmittellinienebene (Cₚ) des Schafts (1) drehbar ist.

2. Pflugschar nach Anspruch 1, wobei der sich abwärts erstreckende Schaft (1) mit einer Pflugvorrichtung (30) drehbar gekoppelt ist, und wobei der Schaft (1) relativ zur Längsmittellinienebene (Cₚ) drehbar ist.

3. Pflugschar nach Anspruch 1 oder 2, ferner mit:
einer vorderen Pflügefläche (6) des Schafts (1);
einer ersten Spülfläche (3a) des Schafts (1), wobei sich die erste Spülfläche (3a) in einer ersten Richtung von der Längsmittellinie (C_{L}) der vorderen Pflügefläche (6) erstreckt, wobei die erste Spülfläche (3a) eine erste Düse (4a) hat; und
einer zweiten Spülfläche (3b) des Schafts (1), wobei sich die zweite Spülfläche (3b) in einer zweiten Richtung von der Längsmittellinie (C_{L}) der vorderen Pflügefläche (6) erstreckt, wobei die zweite Spülfläche (3b) eine zweite Düse (4b) hat.

4. Pflugschar nach Anspruch 3, ferner mit einem abwärts ausgezogenen Vorsprung, der mit dem Schaft (1) gekoppelt ist, wobei der abwärts ausgezogene Vorsprung (7) zum Steuern der Tiefe des Schafts (1) im Boden dient.

5. Pflugschar nach Anspruch 4, wobei der Abschnitt des vorderen Pflügebereichs (3) von etwa +15° bis etwa -15° relativ zur Längsmittellinienebene (C_{P}) des Schafts (1) drehbar ist.

6. Pflugschar nach Anspruch 4, wobei der Schaft (1) von etwa +15° bis etwa -15° relativ zur Längsmittellinienebene (C_{P}) des Schafts (1) drehbar ist.

7. Pflugschar nach einem der Ansprüche 4 bis 6, wobei der abwärts ausgezogene Vorsprung (7) in einem Winkel zwischen etwa 15° und etwa 30° abwärts ausgezogen ist.

8. Pflugschar nach einem der Ansprüche 5 bis 7, wobei sich der abwärts ausgezogene Vorsprung (7) weiter als der Schaft (1) abwärts erstreckt.

9. Pflugschar nach einem der Ansprüche 5 bis 8, wobei die vordere Pflügefläche (6) relativ zur Oberfläche des Bodens nach hinten geneigt ist.

10. Pflugschar nach Anspruch 9, wobei die vordere Pflügefläche (6) etwa 75° relativ zur Oberfläche des Bodens nach hinten geneigt ist.

11. Pflugschar nach Anspruch 10, wobei die erste und die zweite Düse (4a, 4b) jeweils in einem Winkel von etwa 20° relativ zur vorderen Pflügefläche (6) ausstoßen.

12. Pflugschar nach Anspruch 11, wobei die erste Düse (4a) in einer Ebene ausstößt, die parallel zur Längsmittellinienebene (C_{P}) des Schafts (1) ist, und die zweite Düse (4b) in einer Ebene ausstößt, die parallel zur Längsmittellinienebene (C_{P}) des Schafts (1) ist.

13. Verfahren zum Installieren von Kabel im Boden, wobei das Verfahren die folgenden Schritte aufweist:
a. Bereitstellen eines Pflugschars mit einem sich abwärts erstreckenden Schaft (1) mit einem vorderen Pflügebereich, wobei der Schaft eine Längsmittellinienebene festlegt; einer Düse (4), die mit dem Schaft (1) am vorderen Pflügebereich (3) gekoppelt ist, wobei mindestens ein Abschnitt des vorderen Pflügebereichs (3) relativ zur Längsmittellinienebene (Cₚ) des Schafts (1) drehbar ist; und einem abwärts ausgezogenen Vorsprung (7), der mit dem Schaft (1) gekoppelt ist, wobei der abwärts ausgezogene Vorsprung (7) zum Steuern der Tiefe des Schafts (1) im Boden dient;
b. Ziehen des Pflugschars durch den Boden;
c. Ausstoßen von Fluid durch die Düse (4) und in den Boden;
d. Verdrängen des Bodens mit dem Schaft (1), um einen Graben zu bilden; und
e. Verlegen des Kabels im Graben.

14. Verfahren nach Anspruch 13, wobei der Schritt des Bereitstellens eines Pflugschars ferner den folgenden Schritt aufweist: Bereitstellen eines Pflugschars mit einer vorderen Pflügefläche (6) des Schafts (1), einer ersten Spülfläche (3a) des Schafts (1), wobei sich die erste Spülfläche (3a) in einer ersten Richtung von der Längsmittellinie (C_{L}) der vorderen Pflügefläche (6) erstreckt, wobei die erste Spülfläche (3a) eine erste Düse (4a) hat, und einer zweiten Spülfläche (3b) des Schafts (1), wobei sich die zweite Spülfläche (3b) in einer zweiten Richtung von der Längsmittellinie (C_{L}) der vorderen Pflügefläche (6) erstreckt, wobei die zweite Spülfläche (3b) eine zweite Düse (4b) hat.

15. Verfahren nach Anspruch 13, wobei der Schritt des Bereitstellens eines Pflugschars ferner den folgenden Schritt aufweist: Bereitstellen eines Pflugschars mit einer vorderen Pflügefläche (6) des Schafts (1), wobei die vordere Pflügefläche (6) zwischen etwa 30° und etwa 75° relativ zur Oberfläche des Bodens nach hinten geneigt ist, mehreren Düsen (4), die mit dem Schaft (1) am vorderen Pflügebereich (6) gekoppelt sind, und wobei im wesentlichen alle Düsen (4) der mehreren Düsen (4) jeweils in einem Winkel zwischen etwa 0° und etwa 90° relativ zur vorderen Pflügefläche (6) ausstoßen.

## Revendications

1. Soc pour retourner un sol, ledit soc comprenant:
une dent (1) s'étendant vers le bas présentant une surface de labourage avant (3), ladite dent définissant un plan médian longitudinal ;
un embout (4) couplé à ladite dent (1) au niveau de ladite surface de labourage avant (3), **caractérisé en ce qu'**au moins une partie de ladite surface de labourage avant (3) peut tourner par rapport au plan médian longitudinal (Cₚ) de ladite dent (1).

2. Soc selon la revendication 1, dans lequel la dent s'étendant vers le bas (1) est couplée de manière articulée à un appareil de labour (30), dans lequel ladite dent (1) peut tourner par rapport audit plan médian longitudinal (Cₚ).

3. Soc selon la revendication 1 ou 2, comprenant - en outre :
une surface de labourage avant (6) de ladite dent (1) ;
une première surface de jet (3a) de ladite dent (1) ; ladite première surface de jet (3a) s'étendant dans une première direction à partir de l'axe médian longitudinal (C_{L}) de ladite surface de labourage avant (6), ladite première surface de jet (3a) ayant un premier embout (4a) ; et
une seconde surface de jet (3b) de ladite dent (1) ; ladite seconde surface de jet (3b) s'étendant dans une seconde direction à partir de l'axe médian longitudinal (C_{L}) de ladite surface de labourage avant (6), ladite seconde surface de jet (3b) ayant un second embout (4b).

4. Soc selon la revendication 3, comprenant en outre une saillie pointant vers le bas couplée à ladite dent (1), ladite saillie pointant vers le bas (7) permettant de contrôler la profondeur de ladite dent (1) dans ledit sol.

5. Soc selon la revendication 4, dans lequel ladite partie de ladite surface de labourage avant (3) peut être tournée d'environ +15° à environ -15° par rapport au plan médian longitudinal (Cₚ) de ladite dent (1).

6. Soc selon la revendication 4, dans lequel ladite dent (1) peut être tournée d'environ +15° à environ -15° par rapport au plan médian longitudinal (Cₚ) de ladite dent (1).

7. Soc selon l'une quelconque des revendications 4-6, dans lequel ladite saillie pointant vers le bas (7) pointe vers le bas à un angle compris entre 15° et 30° environ.

8. Soc selon l'une quelconque des revendications 5-7, dans lequel ladite saillie pointant vers le bas (7) s'étend plus bas que ladite dent (1).

9. Soc selon l'une quelconque des revendications 5-8, dans lequel ladite surface de labourage avant (6) est inclinée vers l'arrière par rapport à la surface dudit sol.

10. Soc selon la revendication 9, dans lequel ladite surface de labourage avant (6) est inclinée vers l'arrière d'environ 75° par rapport à la surface dudit sol.

11. Soc selon la revendication 10, dans lequel chacun dudit premier et dudit second embouts (4a, 4b) produit un jet à un angle d'environ 20° par rapport à ladite surface de labourage avant (6).

12. Soc selon la revendication 11, dans lequel ledit premier embout (4a) produit un jet dans un plan qui est parallèle au plan médian longitudinal (Cₚ) de ladite dent (1) et ledit second embout (4b) produit un jet dans un plan qui est parallèle au plan médian longitudinal (Cₚ) de ladite dent (1).

13. Procédé d'installation de câble dans un sol, ledit procédé comprenant les étapes consistant à :
a. fournir un soc ayant une dent s'étendant vers le bas (1) avec une surface de labourage avant, ladite dent définissant un plan médian longitudinal, un embout (4) couplé à ladite dent (1) au niveau de ladite surface de labourage avant (3) ; dans lequel au moins une partie de ladite surface de labourage avant (3) peut tourner par rapport au plan médian longitudinal (Cₚ) de ladite dent (1) ; et une saillie pointant vers le bas (7) couplée à ladite dent (1) ; ladite saillie pointant vers le bas (7) permettant de contrôler la profondeur de ladite dent (1) dans ledit sol ;
b. tirer ledit soc à travers ledit sol ;
c. produire un jet de fluide à travers ledit embout (4) dans ledit sol ;
d. déplacer ledit sol à l'aide de ladite dent (1) pour former une tranchée ; et
e. déployer ledit câble dans ladite tranchée.

14. Procédé selon la revendication 13, dans lequel l'étape consistant à fournir un soc comprend en outre l'étape consistant à fournir un soc ayant une surface de labourage avant (6) de ladite dent (1), une première surface de jet (3a) de ladite dent (1) ; ladite première surface de jet (3a) s'étendant dans une première direction à partir de l'axe central longitudinal (C_{L}) de ladite surface de labourage avant (6), ladite surface de jet (3a) ayant un premier embout (4a) et une seconde surface de jet (3b) de ladite dent (1) ; ladite seconde surface de jet (3b) s'étendant dans une seconde direction à partir de l'axe central longitudinal (C_{L}) de ladite surface de labourage avant (6) ; ladite seconde surface de jet (3b) ayant un second embout (4b).

15. Procédé selon la revendication 13, dans lequel l'étape consistant à fournir un soc comprend en outre l'étape consistant à fournir un soc ayant une surface de labourage avant (6) de ladite dent (1), ladite surface de labourage avant (6) étant inclinée vers l'arrière de 30° à 75° environ par rapport à la surface dudit sol, une pluralité d'embouts (4) couplés à ladite dent (1) au niveau de ladite surface de labourage avant (6), et dans lequel sensiblement tous les embouts (4) de ladite pluralité d'embouts (4) produisent chacun un jet à un angle compris entre 0° et 90° environ par rapport à ladite surface de labourage avant (6).
